# EUROPEAN PATENT APPLICATION

(11) **EP 4 790 968 A1**
(43) Date of publication of application: **12.08.2026**
(21) Application number: 25315041.1
(22) Date of filing: 10.02.2025
(51) Int. Cl.: H04L 67/131, H04N 7/15

(54) **A METHOD AND APPARATUS FOR MANAGING MULTI-USER AVATAR BASED COMMUNICATION SESSIONS IN 5G NETWORKS**

(71) Applicant: InterDigital CE Patent Holdings, SAS, 75017 Paris (FR)
(72) Inventor: Hamza, Ahmed, COQUITLAM, V3J 3X5 (CA); Cova Regsteiro, João Pedro, 35220 CHATEAUBOURG (FR)
(74) Representative: Interdigital

(57) **Abstract**

In one general aspect, a method is provided that includes receiving from a first user device, an animation data stream for animating an avatar associated with the first user device, the avatar being part of a shared scene of the multi-user avatar-based session between the first user device and at least one second user device; determining for the at least one second user device, whether the at least one second user device has capabilities to animate the avatar associated with the first user device using the animation data stream. If the at least one second user device has capabilities to animate the avatar, the animation data stream is forwarded to the at least one second user device, otherwise the animation data stream is converted based on at least one second user device's capability before being sent to the at least one second user device.

## Description

### BACKGROUND

The present application is related to the management of multi-party avatar-based communication sessions.

Avatars are digital representations of users in the metaverse, a set of virtual worlds where people can interact with each other in real-time. Users can customize different aspects of their avatars, such as clothing, accessories, and even physical attributes. Avatars allow users to express themselves and create a unique digital identity within the metaverse. The integration, animation, and representation of avatars in real-time communication services is essential to enable immersive experiences.

### BRIEF SUMMARY

In one general aspect, a method is provided that includes receiving from a first user device, an animation data stream for animating an avatar associated with the first user device, the avatar being part of a shared scene of the multi-user avatar-based session between the first user device and at least one second user device; determining for the at least one second user device, whether the at least one second user device has capabilities to animate the avatar associated with the first user device using the animation data stream. If the at least one second user device has capabilities to animate the avatar, the animation data stream is forwarded to the at least one second user device, otherwise the animation data stream is converted based on at least one second user device's capability before being sent to the at least one second user device.

In another aspect, an apparatus is provided that is configured to implement the above method in any one of the embodiments described herein.

In another general aspect, a method is provided that includes establishing a multi-user avatar-based session with an application server managing the multi-user avatar-based session, including sending to the application server, data representing at least one avatar-related capability of the user device, receiving from the application server, an animation data stream relating to an animation of an avatar associated with another user device sharing the multi-user avatar-based session, animating a base avatar model of the avatar associated with the other user using the received animation data stream.

In another aspect, an apparatus is provided that is configured to implement the above method in any one of the embodiments described herein.

One or more embodiments also provide a computer program comprising instructions which when executed by one or more processors cause the one or more processors to perform any one of the methods according to any of the embodiments described herein. One or more of the present embodiments also provide a non-transitory computer readable medium and/or a computer readable storage medium having stored thereon instructions for performing the methods mentioned above.

One or more embodiments also provide a computer readable storage medium having stored thereon a bitstream generated according to the methods described herein. One or more embodiments also provide a method and apparatus for transmitting or receiving the bitstream generated according to the methods described above.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is an example of a reference architecture for avatar (TR 26.813);
FIG. 3 is an example of a call flow for a multi-party communication session, according to one or more embodiments of the present disclosure;
FIG. 4 is an example of remote devices and application server involves in a multi-party communication session over a communication network in accordance with an example of the present principles.
FIG. 5 illustrates a block diagram of a system within which aspects of the present embodiments may be implemented, according to another embodiment.
FIG. 6 shows the syntax of a signal in accordance with an example of the present principles.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

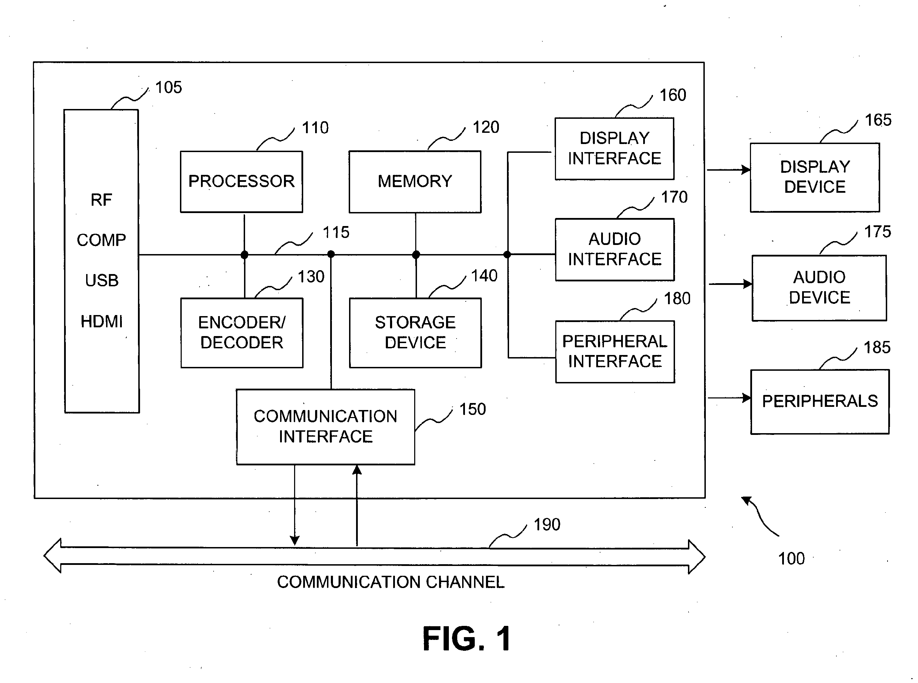

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, or server. One or more elements of the system 100, singly or in combination, may be implemented as an integrated circuit(IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

A number of standardization activities related to avatar representation and avatar-based communication are currently on-going in MPEG and 3GPP. In MPEG, a new specification (ISO/IEC 23090-39) for a standardized avatar representation format is under development and has reached a committee draft (CD) stage (WG03_N01453, "Text of ISO/IEC CD 23090-39 Avatar representation formats", MPEG#149, Geneva, Switzerland, January 2025*).* The specification will define a JSON-based format for describing an avatar, its components, and its relevant assets. Moreover, the specification will also define how to encapsulate such a representation in media containers, such as ISO based media file format (ISOBMFF) containers based on ISO/IEC 14496-12 (ISO/IEC 14496-12:2022, "Information technology - Coding of audio-visual objects - Part 12: ISO base media file format") and ZIP-based containers conforming to *ISO*/*IEC 21320-1* (ISO/IEC 21320-1:2015, "Information technology - Document Container File - Part 1: Core". In addition to the components and assets of the avatar, the containers may also store timed animation data that can be used to playback prerecorded animations.

In 3GPP, the Service and Systems Aspects (SA) working group (SA4) has an on-going activity on avatars in real-time communication services with the objective of identifying and addressing key technology challenges and recommending solutions for the support of Avatars in RTC services in 5G/6G network architectures. This includes documenting the QoS, processing, and storage requirements for Avatars to support a number of identified use cases. The latest version of technical report based on this activity (TR 26.813) can be found in *(*3GPP TR 26.813, "Study of Avatars in Real-Time Communication Services", v1.0.0, December 2024*).*

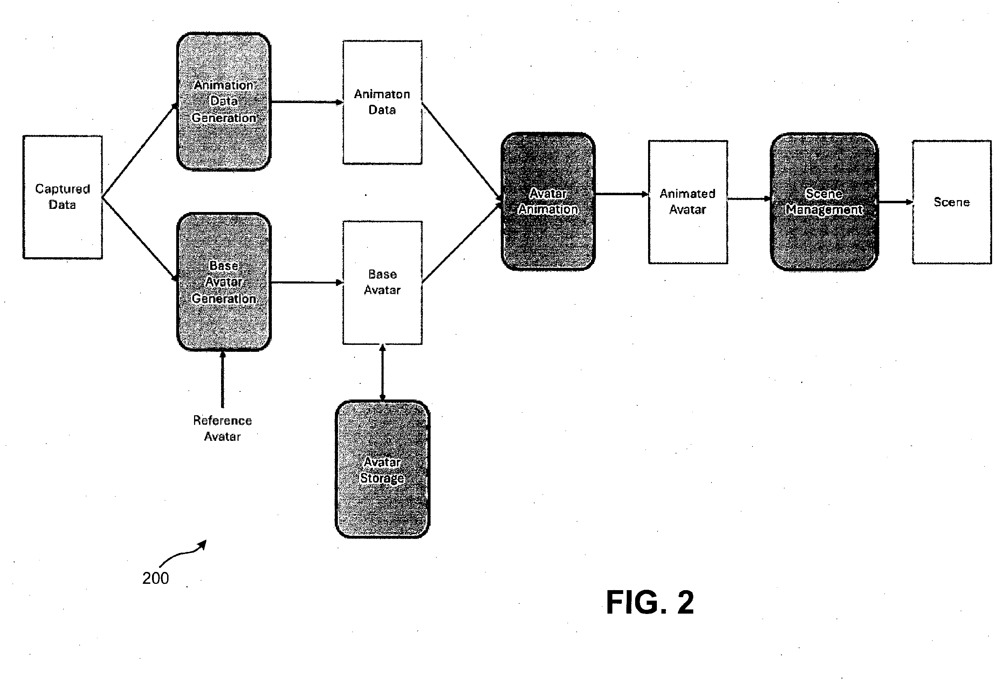

FIG. 2 depicts an example 200 of a reference Architecture for Avatar described in TR 26.813. In this reference architecture, the following functions are identified:
- **Avatar Storage:** an entity that offers storage of base avatars. This entity may be offered by the 5G System, a 3^{rd} party entity, or the local storage of the user's devices. The Avatar Storage ensures proper access to the base avatar and any related data, including authorization of avatar usage rights. The Authentication functionality should be able to map and identify the ownership of an avatar.
- **Avatar Animation:** depending on the avatar representation format, this entity retrieves the base Avatar, receives representation format-specific animation data streams, and performs the avatar animation to produce the animated avatar that will be used in the rendering process.
- **Scene Management:** creates and composes the shared 3D scene for all participants. It integrates a description of the user's Avatar and updates its position and orientation based on the user's pose, and its properties.
- **Animation data generation:** generating animation data from raw signals. The raw signals may come from cameras, microphones, and specialized motion capturing devices, etc.
- **Base Avatar Generation:** generates the base avatar from the inputs such as captured video from camera and other sensors information, possibly in conjunction with a reference avatar.

An embodiment provides a baseline solution for establishing and managing a shared scene in a multi-party avatar communication session and to map the data from tracking devices that have the capabilities to track human features, e.g., hands, facial expressions, body movements or but not limited to eyes motions, onto different avatar representations. With the intent to drive the avatars' animations on the client side of the communications (target avatars). The conversion between the data of the tracking devices and the target avatar capabilities e.g., depending on the avatar supported animation streams, is performed in the network.

In some of the embodiments described herein, the tracking performed by a user device has no knowledge of "avatar", while the application server managing the shared scene is the one with such knowledge of the avatar capabilities of the other user devices involved the shared scene and the application server has functionalities of mapping/translating the received tracking data to avatar animation data.

In a one-to-one avatar-based real-time communication session, each of the two parties involved in the call receives a video stream of the rendered avatar from the other participant or maintains an independent local scene in which it loads, animates, and renders the avatar of the other participant based on a received animation stream. In a multi-party session involving more than two participants, this does not scale well as the number of participants increases.

An aim of the embodiments described herein is how to set up and manage a shared scene which includes the avatars of the users participating in a real-time communication session in 5G/6G networks.

An embodiment provides a baseline solution for establishing and managing a shared scene in a multi-party avatar communication session and to map the data from tracking devices that have the capabilities to track human features, e.g., hands, facial expressions, body movements or but not limited to eyes motions, onto different avatar representations. With the intent to drive the avatars' animations on the client side of the communications (target avatars). The conversion between the data of the tracking devices and the target avatar capabilities e.g., depending on the avatar supported animation streams, is performed in the network.

### Avatar Capabilities for Online Communication

In MPEG, the new specification (ISO/IEC 23090-39) defines the MPEG Avatar Representation Format (ARF) that contains several components that relate to the capabilities or functionalities available in an avatar format. This embodiment refers to ARF but is generic enough to apply to any avatar format.

In ARF the definition of animation capabilities is defined in the following table:

**Table 1 - Definition of "supportedAnimations" object.**

| Name | Type | Use | Description |
|---|---|---|---|
| faceAnimations | array(uri) | O | Lists the supported face animation types. Each item in the array is a string representing a supported face animation type. |
| | | | Each identifier should be formatted as a URN that includes an identifier of the framework, followed by an identifier of the facial blendshape set. |
| bodyAnimations | array(uri) | O | Lists the supported body animation types. Each item in the array is a string representing a supported body animation type. |
| | | | Each identifier should be formatted as a URN that includes an identifier of the body animation/tracking framework, followed by an identifier of the body joint set. |
| handAnimations | array(uri) | O | Lists the supported hand animation types. Each item in the array is a string representing a supported hand animation type. |
| | | | Each identifier should be formatted as a URN that includes an identifier of the body animation/tracking framework, followed by an identifier of the body joint set. |
| landmarkAnimations | array(uri) | O | Lists the supported landmark animation types. Each item in the array is a string representing a supported landmark animation type. |
| | | | Each identifier should be formatted as a URN that includes an identifier of the landmark animation/tracking framework, followed by an identifier of the landmark set. |
| proprietaryAnimations | array( Proprietary Animation) | O | A list of proprietary animation descriptions, which may be used to animate assets in the ARF container. |

Table 1 contains the capabilities of ARF in the current MPEG specifications. Each of the items in the table contain a list of URI (Uniform Resource Identifier) that points to the format supported by ARF.

**Table 2 - Mapping of blendshapes of MORGAN and openXR tracking.**

| |
|---|
| mapping = dict() |
| mapping["BROW_LOWERER_L"]= =["XR_FACE_EXPRESSION2_BROW _LOWERER_L_FB"] |
| mapping["BROW_LOWERER_R"] = ["XR_FACE_EXPRESSION2_BROW_LOWERER_R_FB"] |
| mapping["CHEEK_PUFF_L"] = ["XR_FACE_EXPRESSION2_CHEEK_PUFF_L_FB"] |
| mapping["CHEEK_PUFF_R"] = ["XR_FACE_EXPRESSION2_CHEEK_PUFF_R_FB"] |

Table 2 shows an example of a mapping between the reference model described in MPEG-I Scene Description (ISO/IEC 23090-14) and the semantics used by an OpenXR specification. For example, when the property "faceAnimations" in Table 1 contains a URI that points to the OpenXR specification, table 2 can be used to map blendshapes of an avatar whose representation is based on the reference model (MORGAN) to semantics of the OpenXR specification that is used by a user device for rendering the scene. This allows, for example, tracking devices such as Oculus that use OpenXR semantics to be interoperable across platforms that also use the same specification.

### Avatar Partial Access for Communication and Capabilities

To provide the ability to transcode or map avatars formats between themselves and/or between tracking devices, it is necessary to create a header file in the format of an avatar format, or a text-based file that is lightweight in nature and readable by any system provider, e.g., JSON-based format that is widely used.

The format is a shorter version of the original avatar format. For example, in the case of using the ARF format and focusing only on "supportedAnimations", the new header file format can have the following representation:

| | |
|---|---|
| avatar_header() { | **Descriptor** |
| faceAnimation_flag | u(l) |
| if (faceAnimation_flag) | |
| faceAnimation_index | ue(v) |
| bodyAnimation_flag | u(1) |
| if (bodyAnimation_flag) | |
| bodyAnimation_index | ue(v) |
| handAnimation_flag | u(l) |
| if (handAnimation_flag) | |
| handAnimation_index | ue(v) |
| landmarkAnimation_flag | u(l) |
| if (landmarkAnimation_flag) | |
| landmarkAnimation_index | ue(v) |
| } | |

This permits the user to have a complete ARF file that contains several types of supported animations, but it allows the user to specify to the server/provider/network what features they can support for the current communication. These features are negotiated when the UEs establish a session with an application server (AS). For example, in a scenario of ARF and a user that uses Oculus Meta Quest 3, the avatar header only signals the "handAnimation flag" and gives the index of the format stored in the ARF container via "handAnimation_index". This index refers to an element in the list in the ARF container in "handAnimations" (Table 1). The AS establishes the capabilities of the tracking devices of each UE using the header information. With this information the AS can then filter which UEs are capable of rendering and receiving a bitstream of hand animation information.

In a scenario where two user devices UE1 and UE2 are using two different avatar representations, it is assumed that both avatar representations contain a semantical mapping of their own animations ( for example blendshapes semantics in Table 2) to those defined by a standard organization, such as, OpenXR or MPEG. With the semantical mapping available, the AS is capable of transcoding or translating the blendshape semantics of UE1 and UE2 and reorder the bitstream accordingly. When a UE uses an avatar representation that is not defined by a standard organization, then in a variant, the UE will itself maps the sematics of its animation to semantics defined by a standard organization before sending the animation to the AS. In another variant, when establishing a session with the AS, the UE send the semantical mapping of its animation to to semantics defined by a standard organization such that the AS knows how to map animation data stream received from this UE.

### Multi-party Avatar-based Communication

Multi-party avatar-based communication involves two (e.g., UE1 and UE2) or more (e.g., UE1, UE2, and UE3) participants in a same communication session. The users' avatars are placed in a shared virtual scene that is described using a scene description document and managed by an in-network Scene Manager network function that is part of the application server (AS).

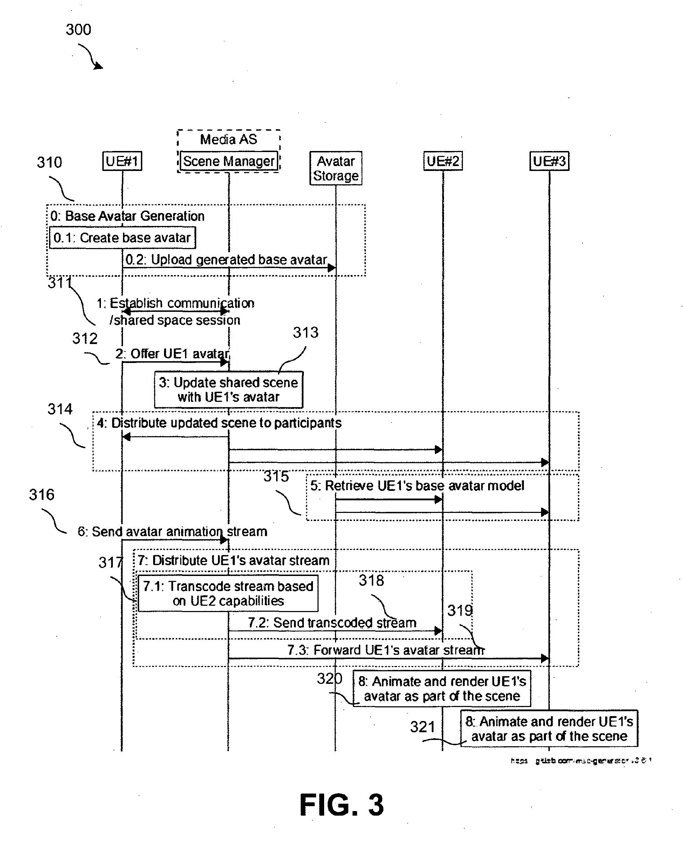

FIG. 3 illustrates an example of a call flow 300 for setting up and managing a shared scene for shared space AR calls where participants are represented by their avatars. The call flow 300 illustrates the method steps performed respectively by the application server AS and the user device UE1, UE2, UE3.

The following describes the steps in a multi-party avatar-based call:
At 310, the user device UE1 generates a personalized base avatar, possibly using a reference avatar format, e.g., Avatar Representation Format (ARF) defined in (ISO/IEC 23090-39). The generated base avatar is then uploaded to an Avatar Storage network function.

In a variant, the UE1 has a previously generated base avatar stored in the Avatar Storage network function. In this case, the UE1 makes a request to the storage for the user's personalized base avatar. This request shall be encrypted and unique for each UE.

At 311, the UE1 establishes or joins a communication/shared space session with the AS. The AS may be a real-time communication (RTC) application server as described in 3GPP TS 26.506, "5G Real-time Media Communication Architecture (Stage 2)", v18.5.0, January 2025*.* As part of the session establishment process, the UE1 may provide the AS with a set of avatar-related capabilities (e.g., supported avatar representation and animation formats and supported animation features). The set of related avatar capabilities can be in the form of metadata or a configuration message with a certain format that allows the AS to identify the UE capabilities, for example as described above.

At 312, the UE1 offers the user's base avatar model for use in the session. In another variant, the user's base avatar model may be signaled to the AS as part of the session establishment process. In another variant, the AS can request the base avatar model corresponding to the user from the Avatar Storage given the identification and authorization of the UE1 at the session initialization level.

At 31 3, if the UE1 is the first device to join the session, the Scene Manager in the AS generates a new shared scene and includes the avatar offered by UE1 as a node in the scene's scene graph. If the UE1 is joining an existing session, the Scene Manager updates the existing shared scene to include the avatar offered by the UE1 as a node in the scene. The newly added node contains a description of how the UE1's avatar can be reconstructed and animated by other participants in the session.

The Scene Manager adds a new node (or set of nodes) to the 3D scene graph that represents the UE1's avatar and related assets. It locally assigns the ownership of this node(s) to User #1, thus only allowing User #1 to update the status of these nodes. A camera node is also inserted and assigned to User #1. This camera is the one used by User #1 to render the 3D scene of the AR call.

In another embodiment, the scene management may be part of a media function (MF) in RTC AS.

At 314, the AS sends a scene description document for the shared scene to UE1 and scene updates to any existing participants in the session. In another embodiment, the UE1 may generate an empty scene upon session establishment with the AS, and the AS sends scene updates to all participants in the session, including UE1, after updating the scene graph to include the UE1's avatar. Subsequent updates may be sent by the AS to all the session participants based on changes to the scene (e.g., other participants joining).

At 315, each participant (e.g., UE2) downloads the UE1's base avatar model from the Avatar Storage network function, based on the information provided in the scene description document and in accordance with the granted level of access. The access may for instance be limited to a predetermined level of detail or to a subset of the digital assets that are stored as part of the base avatar model. The manipulation and animation of UE1's avatar, may be restricted and/or encrypted to the animation stream being carried over the network, hence protecting digital signature of UE1's asset. In a different embodiment, each participant establishes a network socket to receive video streams, and the AS handles the animation and rendering of the participants' avatars and distributes the renderings as video streams, avoiding the problem of sharing private digital assets.

At 316, the UE1 generates an animation data stream for the user's avatar (e.g., based on tracking sensor data, such as a camera capturing the user's face, or based on user interaction) and sends the animation data stream to the AS over an established data channel that is part of the session. The animation data stream is generated from raw signals obtained by the tracking modules of the UE1 (tracking sensor data, camera, microphones, motion capturing devices, ...) and formatted to the avatar representation format used by the UE1. In a variant, the animation data stream directly includes the raw signals which will be formatted by the application server. At 317, Upon receiving the animation data stream, the AS distributes the animation data stream of the UE1 to other participants in the communication session.

The AS may perform a processing step (e.g., transcoding or conversion) on the data prior to forwarding the stream to other participants (e.g., based on the participant's supported avatar animation capabilities and features). The conversion or transcoding guarantees the interoperability of the animation data streams across participants with different devices capabilities.

According to this embodiment, this functionality is possible if each participant provides the metadata information related to its own capabilities, for example, choosing a certain level of detail of the avatar, and a list of supported animation data (hands or eyes animations for example). The session establishment should negotiate such information. This information is provided by the set of related avatar capabilities indicated by each user device at 311.

At 317, the AS determines for each user device in the session, whether the format of the animation data stream received from the UE1 is supported by the user device.

If the user device (e.g., UE3 in FIG. 3) supports the format of the sender (UE1), no transcoding is necessary, and the AS can directly relay or forward the animation data stream directly (319). Otherwise, the user device (for example UE2 in FIG. 3) does not support the format of the sender (UE1), at 318, the AS transcodes or converts the animation data stream received at 316 to a format supported by the UE2. For example, such conversion/transcoding is performed using semantics mapping known by the AS between the format of the received animation data stream and the specification indicating by the UE2 when establishing the session. The transcoded animation data stream is then sent to the UE2.

At 320 and 321, each participant uses the base avatar model downloaded at 315 and the animation data stream from the UE1 received from the AS at 318 or 319 to reconstruct and animate the avatar of the UE1. The avatar is then rendered as part of the scene. In a different embodiment, the reconstruction and animation of the avatar is performed at the AS and each participant only displays a video stream provided by the AS. In this embodiment, the animation data stream is not sent to the UE2 and UE3 at 318 and 319, but the video stream.

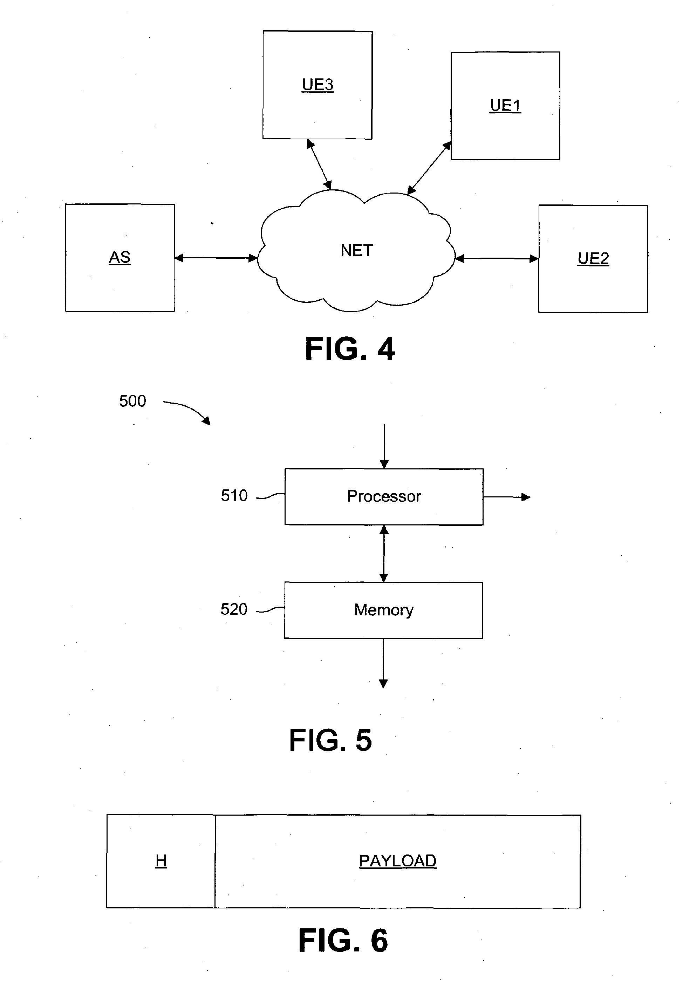

In an embodiment, FIG. 4 illustrates an example of a transmission context between remote user devices UE1, UE2, UE3 participating in a shared avatar-based communication managed by an application server AS over a communication network NET. The communication network NET can be 5G/6G network architectures implementing Real-Time communication services such as described in relation with FIG. 2. An example of a system within which aspects of the present embodiments may be implemented is illustrated on FIG. 5. The system 500 of FIG. 5 can be any of the user devices shown in FIG. 4 or the application server AS.

FIG. 5 shows one embodiment of an apparatus 500 that comprises a processor 510 and can be interconnected to a memory 520 through at least one port. Both Processor 510 and memory 520 can also have one or more additional interconnections to external connections.

When implementing the AS managing a multi-user avatar-based session, processor 510 is configured to at least receive from a first user device, an animation data stream for animating an avatar associated with the first user device, the avatar being part of a shared scene of the multi-user avatar-based session between the first user device and at least one second user device; determine for the at least one second user device, whether the at least one second user device has capabilities to animate the avatar associated with the first user device using the animation data stream, if the at least one second user device has capabilities to animate the avatar, forward the animation data stream to the at least one second user device, otherwise convert the animation data stream based on at least one second user device's capability and send the transcoded animation data stream to the at least one second user device, according to any one of the embodiments described herein.

When implementing a user device participating in the multi-user avatar-based session, processor 510 is configured to at least establish a multi-user avatar-based session with an application server managing the multi-user avatar-based session, send to the application server, data representing at least one avatar-related capability of the user device, receive from the application server, an animation data stream relating to an animation of an avatar associated with another user device sharing the multi-user avatar-based session, animate a base avatar model of the avatar associated with the other user using the received animation data stream, according to any one of the embodiments described herein.

For instance, the processor 510 uses a computer program product comprising code instructions that implements any one of embodiments described herein.

FIG. 6 shows an example of a syntax of a signal transmitted over the network architecture of FIG. 4 for implementing a multi-used avatar-based session. Among all signal transmitted during the session, the syntax illustrated in FIG. 6 comprises a header H and a payload PAYLOAD which is configured to carry a message intended for the application server and comprising data representing at least one avatar-related capability of one of a user device of FIG. 3 or 4 according to any of the embodiments described herein.

Some abbreviations and acronyms could be found across the document. If not defined otherwise in the document, the abbreviations and acronyms are as follows:
- AR: Augmented Reality
- ARF: Avatar Representation Format
- AS: Application Server
- IMS: IP Multimedia Subsystem
- MF: Media Function
- MRF: Media Resource Function
- RTC: Real-time communication
- UE: User Equipment
- URI: Uniform Resource Identifier
- VR: Virtual Reality

One or more embodiments provide a computer program comprising instructions which when executed by one or more processors cause such processors to perform the methods according to any of the embodiments described above. One or more embodiments also provide a computer readable storage medium having stored thereon instructions for implementing the methods described above.

One or more embodiments provide a computer readable storage medium having stored thereon the signal mentioned above generated according to the methods described above. One or more embodiments also provide a method and apparatus for transmitting or receiving data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method, performed by an application server configured to manage a multi-user avatar-based session, comprising:
receiving from a first user device, an animation data stream for animating an avatar associated with the first user device, the avatar being part of a shared scene of the multi-user avatar-based session between the first user device and at least one second user device;
determining for the at least one second user device, whether the at least one second user device has capabilities to animate the avatar associated with the first user device using the animation data stream,
if the at least one second user device has capabilities to animate the avatar, forwarding the animation data stream to the at least one second user device,
otherwise converting the animation data stream based on at least one second user device's capability and sending the transcoded animation data stream to the at least one second user device.

2. The method of claim 1, wherein at least one of determining for the at least one second user device, whether the at least one second user device has capabilities to animate the avatar or transcoding the animation data stream based on at least one second user device's capability is based on data representing at least one avatar-related capability of the at least one second user device received from the at least one second user device when establishing the multi-user avatar-based session with the at least one second user device.

3. The method of claim 2, wherein the at least one avatar-related capability of the at least one second user device comprises at least one of an avatar representation format, an animation format, one or more animation features, that are supported by the at least one second user device.

4. The method of claim 3, wherein the at least one avatar-related capability of the at least one second user device is received by the application server in a message that indicates for at least one capability of an avatar representation format, at least one Uniform Resource Identifier pointing to a format stored in a container of the avatar representation format that is supported by the at least one second user device.

5. The method of claim 4, wherein the message comprises at least one flag indicating that at least one Uniform Resource Identifier for the at least one capability is signaled in the message.

6. The method of claim 4 or 5, wherein converting the animation data stream based on the at least one second user device's capabilities comprises mapping semantics of a first format of the animation data stream to semantics of the format pointed by the at least one Uniform Resource Identifier.

7. The method of any one of claims 1-6, further comprising:
obtaining a base avatar model of the first user device,
adding the base avatar model in a shared scene of the multi-user avatar-based session providing an updated shared scene,
distributing the updated shared scene to at least the at least one second user.

8. A method, performed by a user device, comprising:
establishing a multi-user avatar-based session with an application server managing the multi-user avatar-based session, including sending to the application server, data representing at least one avatar-related capability of the user device,
receiving from the application server, an animation data stream relating to an animation of an avatar associated with another user device sharing the multi-user avatar-based session,
animating a base avatar model of the avatar associated with the other user using the received animation data stream.

9. The method of claim 8, wherein the at least one avatar-related capability of the user device is sent to the application server in a message that indicates for at least one capability of an avatar representation format, at least one Uniform Resource Identifier pointing to a format stored in a container of the avatar representation format that is supported by the user device.

10. The method of claim 9, wherein the message comprises at least one flag indicating that at least one Uniform Resource Identifier for the at least one capability is signaled in the message.

11. The method of any one of claims 8-10, further comprising obtaining the base avatar model associated with the other user device from an avatar storage system based on a scene description document received from the application server.

12. The method of any one of claims 8-11, further comprising generating a base avatar model associated with the user device and uploading the base avatar model associated with the user device to an avatar storage system or sending the base avatar model associated with the user device to the application server.

13. The method of any one of claims 8-12, further comprises:
tracking by the user device, animation data relating to a user of the user device,
generating from the animation data, an animation data stream to animate an avatar of the user device in the multi-user avatar-based session,
sending the animation data stream to the application server.

14. An apparatus comprising one or more processors configured to implement the method of any one of claims 1-13.
